# EUROPEAN PATENT APPLICATION

(11) **EP 4 516 761 A1**
(43) Date of publication of application: **05.03.2025**
(21) Application number: 23795719.6
(22) Date of filing: 03.04.2023
(51) Int. Cl.: C04B 33/24

(54) **ENAMELLED CERAMIC MATERIAL WITH A LOW COEFFICIENT OF THERMAL EXPANSION**

(30) Priority: 29.04.2022 ES 202230397
(71) Applicant: Thesize Surfaces, S.L., 12550 Castellón (ES)
(72) Inventor: BUENO TEBAR, Rafael David, 46500 Valencia (ES); SEGARRA VIÑALS, Francisco, 12004 Castellón (ES)
(74) Representative: Fernández-Pacheco, Aurelio Fernández
(86) International application number: PCT/IB2023/053346
(87) International publication number: WO 2023/209467

(57) **Abstract**

Glazed ceramic material with a low coefficient of thermal expansion to be used as the main raw material (65% to 85%) in porcelain stoneware compositions to manufacture large format sheets (larger than 1.4 m) and also to be used as the main raw material in the manufacture of a glaze (85% to 95%) that will provide the large format sheet with a waterproof, protective and decorative surface. The frit will give the set (body with glaze) a very low coefficient of thermal expansion (hereinafter referred to as CTE). In addition, the resulting ceramic composition can be processed in a conventional ceramics kiln, as aspects such as melt viscosity or adhesion to the rollers have been taken into account during development. As it has a very low CTE, glazed ceramic material can be used as a substitute for glass ceramic material used in the manufacture of induction hobs. This glazed ceramic material can be coloured (both the body and the glaze) and decorated (the glaze), thus adding a new feature to the traditional induction hob.

## Description

### PURPOSE OF THE INVENTION

This specification refers to an invention that relates to the development of a ceramic material in the SiO₂-Al₂O₃- Li₂O system to be used as the main raw material (65% to 85%) in porcelain stoneware compositions for the manufacture of large format sheets (larger than 1.4 m), and which is also to be used as the main raw material in the manufacture of a glaze (85% to 95%) to provide the large format sheet with a waterproof, protective and decorative surface. The frit will give the set (body with glaze) a very low coefficient of thermal expansion (hereinafter referred to as CTE). In addition, the resulting composition can be processed in a conventional industrial ceramic kiln, so aspects such as melt viscosity or adhesion to the rollers have been taken into account during development. As it has a very low CTE, the glazed ceramic material can be used as a substitute for glass ceramic material used in the manufacture of induction hobs. This glazed ceramic material can be coloured (both the body and the glaze) and decorated (the glaze), thus adding a new feature to the traditional induction hob. The glazed ceramic material proposed can also be used for the manufacture of large-format slabs and as a kitchen worktop. In the latter case, if an induction generator is installed underneath, it provides the possibility of firing directly on top of the area where the generator has been installed, thus creating a single surface without the need to cut material to insert a hot plate or induction hob.

### FIELD OF APPLICATION OF THE INVENTION

This invention is suitable for use in the ceramic materials manufacturing industry.

### BACKGROUND TO THE INVENTION

In the field of ceramic material processing, there are now ceramic material compositions with a low coefficient of thermal expansion (CTE) but they are generally composed of at least one frit in a weight percentage of between 10% and 50%, wherein the inorganic raw material comprises inosilicates in a weight percentage between 50% and 90%. There are also ceramic compositions suitable for metallic surfaces, or composed of sheets, usually of thermosetting composite material, and which may contain induction or electrical means of heating.

Ceramic materials, in general, have serious disadvantages in terms of thermal shock, i.e. they can break under drastic temperature changes. The present ceramic material, the invention of which is proposed, has a very low coefficient of expansion that does not present this problem.

Existing ceramic materials with a low coefficient of expansion require heat treatments at temperatures of between 1180°C and 1700°C for between 1 and 40 hours.

Conversely, ceramic materials with a high frit content to reduce their coefficient of expansion tend to have high pyroplasticity values (deformation at high temperature) and are therefore difficult to process in conventional ceramic kilns.

There is, to the best of this party's knowledge, no ceramic material consisting of 65 to 85% frit for the production of large format slabs or sheets that obtains a low coefficient of expansion.

Until now, it has not been possible to achieve, as is proposed by the present invention, a ceramic material with a low coefficient of thermal expansion whose formula consists of between 65% and 85% frit for large format sheets (>1.4 m / 6 to 30 mm thick) in the SiO₂-Al₂O₃-Li₂O system, and between 15 and 35% inorganic raw material (mixture of kaolin and clay) that does not contain inosilicates in its charge formula, that can be pressed in any thickness and format, and which is coated with a thin vitreous layer of glaze with a low coefficient of expansion, formulated with between 85% and 95% frit in the SiO₂-Al₂O₃- Li₂O system and between 5% and 15% kaolin and whose heat treatment - to which the whole set is subjected - is 1150°C in a variable total cycle duration according to the thickness of the pressed body and which can also be coloured and decorated on the surface.

### DESCRIPTION OF THE INVENTION

The proposed glazed ceramic material with a low coefficient of thermal expansion consists of a body formed by uniaxial pressing of an atomised powder by means of a hydraulic press, coated with a glaze on its exposed side and subsequently fired in a conventional industrial ceramic firing kiln.

The atomised powder has been produced by drying, in an atomiser, a wet milled ceramic slip in a ball mill. The barbotine is composed of frit, clay, kaolin, water, deflocculant and a plasticising additive. Inorganic pigments can also be added as an option, depending on the desired colour of the fired body.

The function of the frit is to reduce the coefficient of thermal expansion of the ceramic material. Clay and kaolin have a different function in each part of the process:
- firstly, to facilitate the suspension of the barbotine, in order to be able to carry out the grinding and atomisation process with guarantees and,
- secondly, to provide the atomised product with the appropriate plasticity, which enables it to be easily pressed in a hydraulic press. Furthermore, the clay and kaolin allow the body to absorb part of the humidity of the glaze, maintaining the consistency of the piece in the glazing and decoration process.

The glaze proposed in this invention consists of a frit, very similar to that of the atomised glaze, and a kaolin. The frit has the same function both in the glaze and in the body (to reduce the coefficient of thermal expansion). The kaolin is added to frit and, after wet milling, a suspension with a certain viscosity is obtained. The glaze can be applied by means of an airless sprayer or a waterfall unit, and once fired it gives a waterproof, protective and decorative layer to the body. The glaze can also be decorated with coloured digital inorganic inks.

**It** is also possible to apply the frit in the form of granules (ground to a certain particle size distribution) directly onto the body, thus obtaining, after heat treatment, a waterproof and transparent glassy surface. This surface can subsequently be machined or polished to obtain a smooth surface with a mirror shine.

The process for obtaining the ceramic material:
1. Characteristics of the frit.
2. Characteristics of the body.
   - 2.1 Raw Body
   - 2.2 Fired Body
      - 2.2.1 Coefficient of expansion of the body.
      - 2.2.2 Microstructural characterisation of the body.
      - 2.2.3 Determination of the phases crystallising during firing and the influence of cooling.
3. Characteristics of the glaze

### 1. Characteristics of the frit.

The frit is a mixture of inorganic chemicals obtained by the rapid cooling of a melt, converting the chemicals thus produced into insoluble glassy compounds in the form of granules.

To obtain the frits, the different raw materials are mixed in a dry process. The mixture obtained is then placed in an alumina crucible and subjected to a thermal cycle in an electric laboratory furnace, which consists of heating from a temperature of 500°C up to the maximum temperature (1500- 1550°C), at a rate of 10°C/min. The crucible with the mixture is kept at maximum temperature for a minimum time determined according to the characteristics of the frit (30-45 minutes), after which the melt is cooled by pouring it over water, thus obtaining the frit.

The main components of the final frits tested, expressed as oxides, are presented below. The percentage of each oxide will depend on the desired flux values, whiteness, translucency and coefficient of thermal expansion to be achieved.

**Table 1. Chemical analysis of the frits used.**

| **Rust** | **% (by weight)** |
|---|---|
| SiO₂ | 47.5-68.6 |
| Al₂O₃ | 17.4-40.3 |
| Li₂O | 3.8-11.8 |
| B₂O₃ | 0.9-10.0 |
| TiO₂ | 0.0-4.0 |
| CaO | 0.0-1.9 |
| MgO | 0.0-1.3 |
| ZnO | 1.5-3.6 |
| BaO | 0.0-3.0 |
| Na₂O | 0.0-0.7 |
| K₂O | 0.0-0.3 |
| Fe₂O₃ | 0.0-0.3 |

Quartz, kaolins, alumina hydroxides, lithium carbonates, barium carbonates, zinc oxides, boric acids, anatase, dolomites and calcium carbonates were used in the frit formulations.

Among the compositions tested (frit + clay and kaolin), the ones obtained with the frit formulated for the preferred embodiment are the ones that best balance the desired properties (whiteness, translucency, low coefficient of expansion and a specific melting point).

The loading formula used is presented below:

**Table 2. Loading formula of the frits**

| **Raw material** | **% (by weight)** |
|---|---|
| Kaolin | 10.1-16.9 |
| Quartz | 29.8-49.8 |
| Aluminium Hydroxide | 13.4-38.8 |
| Lithium Carbonate | 8.0-21.2 |
| Barium carbonate | 0.0-3.1 |
| Zinc oxide | 0.0-1.7 |
| Boric acid | 0.0-14.3 |
| Dolomite | 0.0-4.6 |

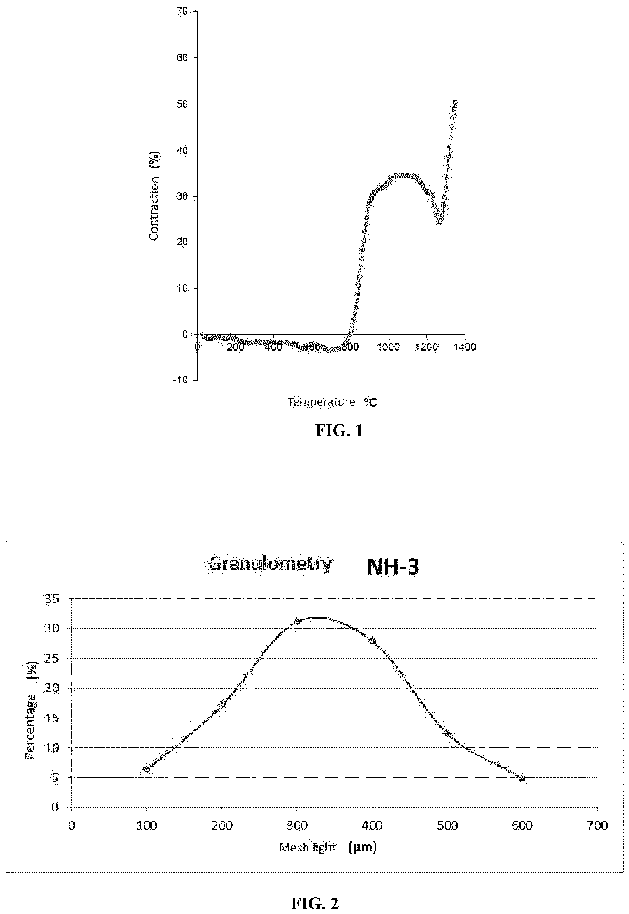

Using a heating microscope, the shrinkage-temperature curve and the characteristic temperatures of the frit produced were determined (*Fig. 1* *Shrinkage curve and temperature).*

The frit starts to shrink at a temperature of 810°C. In the 900 - 1100°C temperature range, the frit undergoes crystallisation. The frit then continues to shrink up to a temperature of 1240°C. Softening takes place at 1280°C and melting at 1340°C.

**Table 2. Characteristic frit temperatures**

| **Characteristic Temperature** | **Frit** |
|---|---|
| Start of contraction (T_{IC}) | 810 |
| End of contraction (T_{FC}) | 1240 |
| Softening (T_{R}) | 1280 |
| Sphere temperature (ST) | 1290 |
| Semisphere temperature (T_{1\2}) | 1320 |
| Melting temperature (MT) | 1340 |

The CTE of the frit has been determined by means of a dilatometer. The CTE measures the relative change in length or volume that occurs when a solid body changes temperature.

**Table 3. Dilatometric analysis of the frit body**

| **Property** | **Frit** |
|---|---|
| α₅₀₋₃₀₀ (_{∘}C⁻¹) x 10⁻⁷ | 9.7 |
| α₃₀₀₋₅₀₀ (_{∘}C⁻¹) x 10⁻⁷ | 19.7 |

### 2. Characteristics of the body

### 2.1. Raw Body

The raw body is formed by uniaxial pressing in a hydraulic press of an atomised powder obtained by drying, in an atomiser, a wet-milled ceramic slip in a ball mill.

A deflocculant (0.7% on the dry solid) is used for milling, which will allow us to regulate the density and viscosity of the slip, thus enabling us to obtain a particle size curve of the atomised material suitable for the subsequent pressing stage.

Before spraying, the barbotine is mixed with a plasticising additive (1% on the dry solid), which will give the pressed body the appropriate mechanical resistance to withstand the transport process through the glazing and decoration line, prior to firing.

**Table 4. Load formula of the ceramic material**

| **Raw material** | **% (by weight)** |
|---|---|
| Clay | 5-15 |
| Kaolin | 5-25 |
| Frit | 65-85 |

The following table shows the particle size distribution of the spray-dried material and the characteristics of the pressed crude body (*Fig 2**. Particle size distribution of the atomised ceramic material*).

**Table 5. Raw properties of atomised pressed ceramic material**

| **Property** | **Atomisation** |
|---|---|
| Rejection at 63 µm (%) | 2.2 |
| Humidity (%) | 6.0 |
| Pressure (kg/cm²) | 350 |
| Bulk density (gr/cm³) | 1.812 |
| Dry mechanical strength (kg/cm²) | 31.2 |

### 2.2. Fired Body

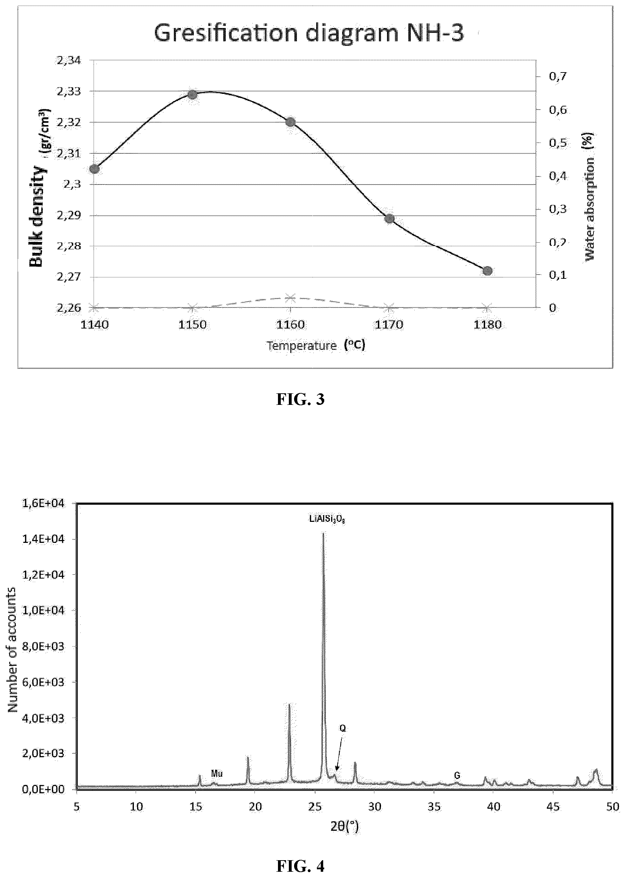

In this section, the evolution of the bulk density during firing and the water absorption with the temperature of the preferred composition has been determined in order to establish the ideal temperature for firing the body (*Fig 3**. Evolution of the bulk density and water absorption of the body with firing temperature*).

During firing, it can be observed that the body reaches the vitrification temperature at 1140°C which is slightly lower than the maximum densification temperature (1150°C). The maximum density obtained is 2.329 g/cm³.

### 2.2.1. Coefficient of expansion of the body.

**Table 8. Dilatometric analysis of the fired body**

| **Sample** | **Body** |
|---|---|
| Expansion at 700 ^{oC}(‰) | 1.4 |
| α₅₀₋₃₀₀ (_{∘}C-1) × 10₋₇ | 11 |
| α₃₀₀₋₅₀₀ (_{∘}C⁻¹) × 10₋₇ | 23 |
| α₅₀₀₋₆₅₀ (_{∘}C⁻¹) × 10₋₇ | 23 |

It is observed that the fired body of the preferred ceramic material provides a higher thermal expansion than the frit of the body alone, due to the worse reactivity of the silica and alumina from the clay and kaolin with the lithium present in the frit.

### 2.2.2. Microstructural characterisation of the body.

For the characterisation of the body, the crystalline phases have been identified by X-ray diffraction (XRD) of the preferred ceramic material.

Figure 4 shows the diffractogram obtained from the body sample, in which the peaks of maximum intensity of the identified phases have been labelled, as well as other characteristic reflections of lower intensity (the relative intensity of the pure phase is indicated in brackets). The following is noted:
- A lithium feldspar or lithium orthoclase (lithium silicoaluminate LiAlSi₃O₈) and, as minority phases, Mullite (Al₆Si₂O₁₃), a Gahnite-type spinel (ZnAl₂O₄) and quartz (SiO₂).
- The residual quartz detected is found in very low proportions and comes from clay and kaolin.
- Gahnite-type spinel must contain zinc present in the frit (*Fig 4**. X-ray diffraction of the fired body*)*.*

### 2.2.3. Determination of the phases crystallising during firing and the influence of cooling.

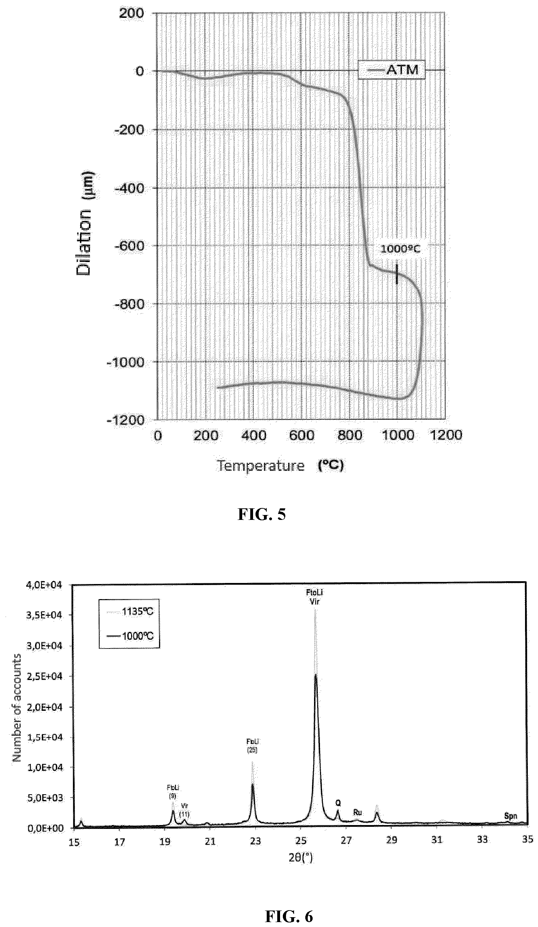

Figure 5 shows the dimensional variation of the atomised preferred ceramic material with firing temperature. The material begins to shrink significantly from 800°C and this shrinkage stops at 900°C. Between 900°C and 1100°C a certain stability of the material is observed, and from this temperature a second shrinkage begins. This dimensional behaviour is typical for materials with devitrification during firing, which takes place mainly in the stabilisation zone.

To determine which phases develop during firing, X-ray diffraction was carried out on a piece fired at 1000°C, of one of the ceramic materials tested (not the preferred one) and cooled rapidly by quenching, and compared with a piece of the same material fired at 1135°C in a firing cycle with progressive cooling under the conditions of the usual firing cycles (*fig. 6* *Diffractogram of the sample fired with progressive cooling (1135°C) and the sample fired at 1000°C and rapidly cooled*)*.* There are important differences between the two diffractions, and the sample at 1135°C shows a higher content of crystalline phases with lithium, specifically feldspar or lithium orthoclase. By contrast, the sample rapidly cooled to 1000°C shows virgillite as lithium phases in addition to feldspar. The differences observed are due to the different thermal cycle used for each sample, in particular the maximum firing temperature (1135°C vs. 1000°C). In addition to these phases, small amounts of quartz, rutile and spinel are detected in all samples.

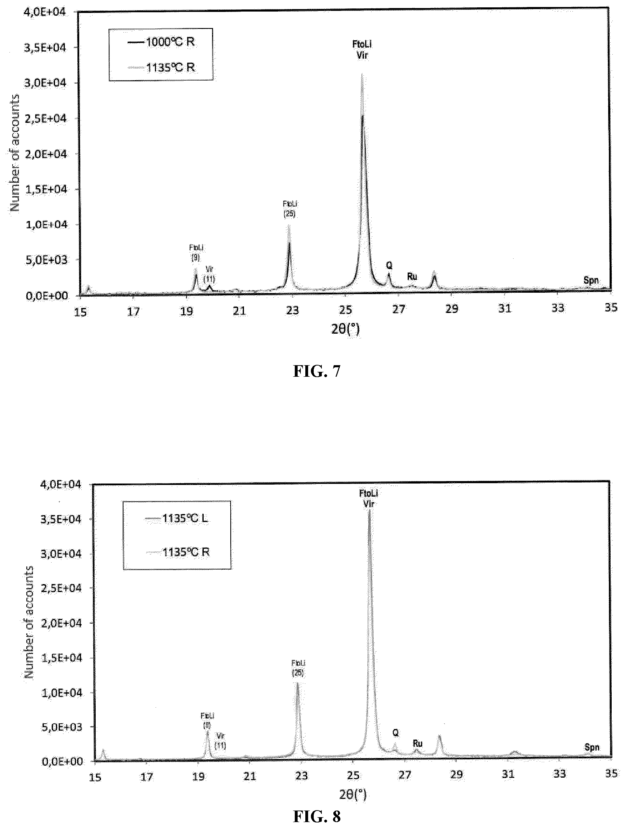

Fig. 7 shows a comparison between the diffractogram of pieces fired at 1000°C and 1135°C cooled by quenching. It can be seen that while at 1000°C Virgillite and lithium feldspar are detected, at 1135°C only the feldspar phase is detected, with Virgillite disappearing. This result is in agreement with the above and indicates that at low temperatures the formation of Virgillite is favoured, but at high temperatures only the feldspar phase is formed. Furthermore, with the temperature increase from 1000°C to 1135°C, devitrification is favoured, which seems to indicate that there is no significant dissolution of devitrified crystals at the product firing temperature (1135°C).

Finally, the influence of cooling rate on the devitrified phases is shown (*fig.* 8 *shows the diffractogram of the sample cooled slowly (1135°C L) and rapidly (1135°C R))* the conclusion is that slow cooling favours devitrification, probably due to the increase in the time that the specimen takes to cool down is at high temperature (>1135°C).

### 3. Characteristics of the glaze

When testing the preferred frit that was used in the formulation of the body to produce the glaze, too much crystallisation is observed, giving a surface that is too rough. To solve this problem, a second preferred frit for the glaze was formulated, was formulated and a new glaze was obtained. This frit has a lower percentage of Al₂O₃ and a higher percentage of Li₂O, ZnO, BaO, CaO and B₂O₃ than the frit with which the body was formulated.

The glaze frit has a higher melting point than the body frit, in order to reduce crystallisation during glaze firing.

The glaze formula finally used with this second preferred frit is as follows:

**Table 9. Glaze loading formula**

| **Raw material** | **% (by weight)** |
|---|---|
| Frit | 85-95 |
| Kaolin | 5-15 |

Glazes have been obtained through the application of this glaze, which provide suitable properties for use on glass ceramic hobs.

Tests were carried out to determine the scratch and wear resistance of the glazes obtained. These results were compared with those obtained on a commercial glass ceramic hob.

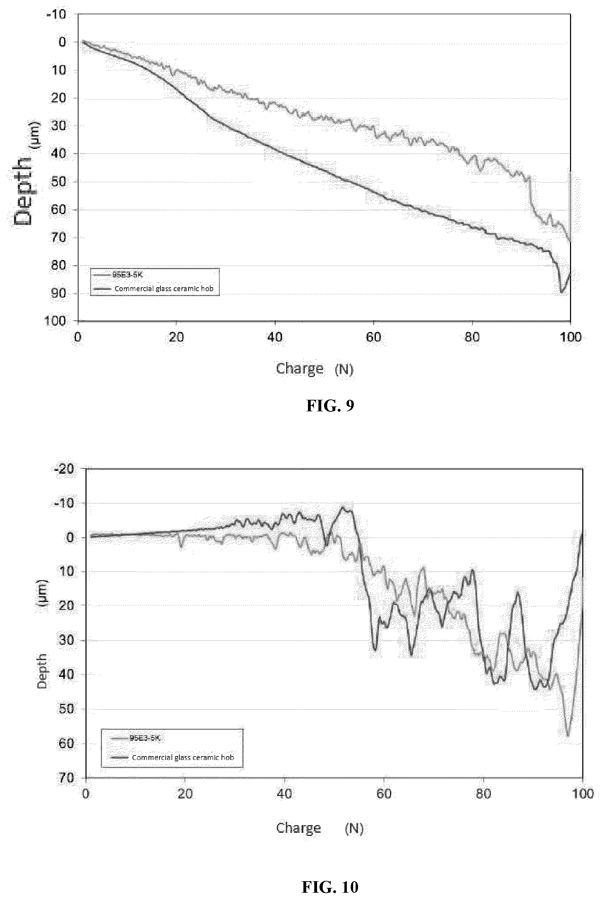

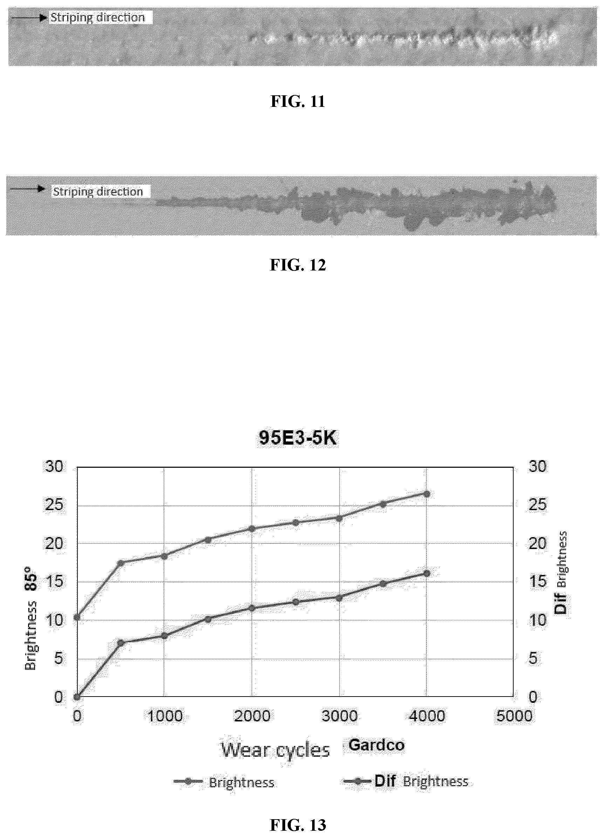

The results obtained in the determination of the scratch resistance of the glaze compared with those of a commercial glass ceramic hob are shown in table 10 below. **It** details the average critical load values determined from the micrographs of the scratches made (in fig. 11 and 12) you can see the difference in the scratch made between the preferred glaze and the commercial glass ceramic hob, and from the scratch graphs for each of the samples tested (in fig. 9 and 10) a comparative scratch graph between the preferred glaze and the commercial glass ceramic hob can be seen. The total deformation of the samples can be seen in the first graph and the plastic deformation in the second graph. The critical load is defined as the load value applied for which a change of mechanism occurs during scratching. In this case, different critical loads have been observed on the tested specimens, defined as follows:
- Lc₁: Crack initiation/scratch furrow.
- Lc₂: Chipping initiation.
- Lc₃: Cohesive failure of the material: Breakage in depth.
- Lc₄: Appearance of chipping at the edges of the groove (spallations).

**Table 10. Mean critical load values Lc (N).**

| **Sample** | **Lc₁** | **Lc₂** | **Lc₃** | **Lc₄** |
|---|---|---|---|---|
| **Preferred glaze (95%Frit-5% Kaolin)** | - | 24 ± 5 | 54 ± 2 | - |
| **Commercial glass ceramic hob** | 5 ± 1 | 14 ± 1 | 26 ± 3 | 48 ± 3 |

The results obtained indicate that the preferential glaze developed shows a better scratch behaviour than that of a commercial glass ceramic hob, since the determined load values are higher.

With regard to the wear resistance of the glaze obtained with the application of the one preferred, the test was carried out using Gardco equipment and a green scouring pad (containing quartz as an abrasive), thus simulating the type of abrasion to which it will be subjected during use.

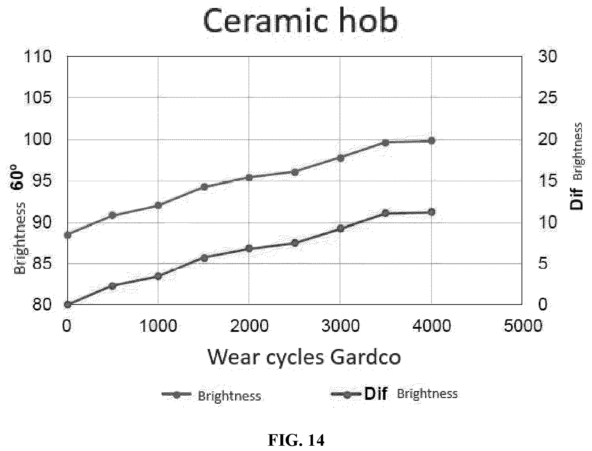

In Fig. 13 and Fig.14 the variation of the gloss of both samples with the wear cycles and the difference in gloss after each stage with respect to the initial gloss. Due to the higher dullness of the preferred glaze sample, the angle used to determine its gloss was 85°, while for the glass ceramic hob the measurements were made at an angle of 60°. In both cases an increase in gloss is observed, indicating that wear is polishing the material. On the basis of these results, it should be concluded that the glass ceramic hob has better wear resistance than the developed glaze, since the change in gloss experienced during the test is lower (11 gloss units after 4000 cycles on the commercial hob compared to 16 on the glaze made with the preferred glaze). This is because brightness measurements taken at an 85° angle have a higher sensitivity. Also, visually, the change in appearance following the test is higher in the commercial glass ceramic hob sample. Consequently, for practical purposes, it can be concluded that the sample with the preferred glaze has better wear behaviour mainly because its initial gloss is lower than that of the commercial glass ceramic hob.

### DESCRIPTION OF THE DRAWINGS

The figures show an image of 12 explanatory graphs and diffractograms of the glazed ceramic material.
- Figure 1:: Shows a graph of the shrinkage-temperature curve of the frit produced for the body. This is a curve of frit shrinkage as a function of temperature. Shrinkage is measured in percent (%) and temperature in degrees Celsius (°C).
- Figure 2:: Shows a graph of the particle size distribution of the atomised ceramic material. **It** is a curve of the granulometric distribution of the atomised ceramic material where we have on the ordinates the percentage by weight measured in percent (%) for each sieve represented by its mesh size, measured at microns (µm), in abscissa.
- Figure 3:: Shows the diagram of the ceramic material's stoneware. Evolution of the bulk density and water absorption of the body with the firing temperature. It is a curve of the diagram of the ceramic material's stoneware. We measure on the two ordinate axes the evolution of bulk density and water absorption as a function of temperature on the abscissa. The bulk density is measured in grams per cubic centimetre (gr/cm³), the water absorption in weight percentage (%) and the temperature in (°C).
- Figure 4:: Shows a graph of the X-ray diffraction of the fired body of the ceramic material.
- Figure 5:: It shows a graph of the dimensional variation of the raw body of the ceramic material with the firing temperature.
- Figure 6:: Shows a diffractogram of the sample fired at 1135°C of one of the tested ceramic materials (not the preferred one) with progressive cooling and a sample of the same material fired at 1000°C and rapidly cooled.
- Figure 7:: Shows a diffractogram of the sample fired at 1135°C of one of the tested ceramic materials (not the preferred one) and a sample of the same material fired at 1000°C and rapidly cooled.
- Figure 8:: It shows a diffractogram of the fired sample of one of the tested ceramic materials (not the preferred one) at 1135°C and cooled slowly (1135°C S) and a sample of the same material fired at 1135°C and cooled rapidly (1135°C R).
- Figure 9:: It shows a comparative scratch graph between the developed preferred glaze and a commercial glass ceramic hob (total deformation of the samples).
- Figure 10:: Displays a comparative scratch chart between the preferred glaze developed and a commercial glass ceramic hob (plastic deformation of the specimens).
- Figure 11:: It shows a micrograph of the scratch on the preferred glaze.
- Figure 12:: Shows a micrograph of the scratch on a commercial glass ceramic hob.
- Figure 13:: Shows the results obtained in the wear resistance test on Gardco equipment for the sample of the preferred glaze.
- Figure 14:: Shows the results obtained in the test for wear resistance on Gardco equipment for the sample "commercial glass ceramic hob".

### PREFERRED IMPLEMENTATION OF THE INVENTION

For the manufacture of the preferred glazed ceramic material, the following procedure was followed:
1.- Firstly, the material that makes up the body was prepared by atomising the mixture of raw materials (80% frit body, 10% clay and 10% kaolin), wet milled in an alumina ball mill with the help of a deflocculant (sodium silicate at 0.7% by weight of the dry solid). After grinding and prior to atomisation, a plasticiser additive (sodium acrylate at 1% on the dry solid) was added to the barbotine.
2.- Secondly, the material composing the glaze was also prepared by wet milling in an alumina ball mill of the raw materials (95% glaze frit and 5% kaolin). A binder (sodium carboxymethyl cellulose) and a deflocculant (sodium tripolyphosphate) were introduced into the mill charge, both in a proportion of 0.3% by weight of the dry solid.
3.- The atomised material, with a humidity of 6.0%, was pressed in an industrial hydraulic press with a normal pressure of 350 Kg/cm², dried in an industrial dryer, with a normal working cycle, and then glazed by spraying (airless). In order to increase the deposited weight compared to normal industrial conditions, a double application of the glaze was carried out using two consecutive booths. The grammage applied in each of these booths was 25g of suspension in a 30x30 cm² piece, i.e. around 280 g/m² suspension per booth.
4.- The glazed material was fired in an industrial oven, using a total firing cycle of 40 minutes, with a maximum temperature of 1150°C.

With regard to the characterisation of the ceramic material obtained, which has been carried out at the present invention we can see, in the diagram of vitrification presented (*fig.* 3), that the ceramic material obtained with the body frit reaches the vitrification temperature at 1140°C, which is slightly lower than the maximum densification temperature (1150°C). The maximum density obtained is high (2.329 gr/cm³), so the pieces have a low internal porosity. The fired pieces do not show pyroplastic deformation at the firing temperature.

The fired body has much lower coefficients of expansion than those of typical porcelain stoneware compositions (see *table 8*), although higher than those observed for commercial glass ceramic slabs. This may be because the crystaline phase formed is mainly lithium orthoclase, which has a higher thermal expansion than virgillite, which is the crystalline phase detected in commercial hobs.

Finally, the glaze obtained with the frit * provides properties suitable for use on glass ceramic hobs (matt appearance, smooth texture, thermal shock resistance, stain resistance and high hardness).

## Claims

1. Glazed ceramic material with a low coefficient of thermal expansion **characterised by** the fact that it is composed of a body and a glaze. The body formula contains between 65% and 85% frit in the SiO₂-Al₂O₃- Li₂O system and 15-35% inorganic feedstock, a mixture of kaolin and clay, which does not contain inosilicates in its filler formula, which can be pressed in large format sheets, larger than 1.40 m and between 6 and 30 mm thick, and which is coated with a thin vitreous layer of glaze, the glaze formula containing between 85% and 95% of frit in the SiO₂-Al₂O₃- Li₂O system and between 5% and 15% kaolin and for its use as a ceramic material, the whole is subjected to a heat treatment of less than 1200°C in a cycle of variable total duration depending on the thickness of the pressed body and which also allows it to be coloured and decorated on the surface, the specific composition of which is as follows:
Composition of the body:
The body consists of:
• Between 65% and 85% of frit in the SiO₂-Al₂O₃- Li₂O system to be used as the main raw material in porcelain stoneware compositions. The frit has the following composition expressed as a percentage of major oxides:
| **Rust** | % (by weight) |
|---|---|
| SiO₂ | 47.5-68.6 |
| Al₂O₃ | 17.4-40.3 |
| Li₂O | 3.8-11.8 |
| B₂O₃ | 0.9-10.0 |
| CaO | 0.0-1.9 |
| MgO | 0.0-1.3 |
| ZnO | 1.5-3.6 |
| BaO | 0.0-3.0 |
The frit loading formula is as follows:
| **Raw material** | **% (by weight)** |
|---|---|
| Kaolin | 10.1-16.9 |
| Quartz | 29.8-49.8 |
| Hydroxide Aluminium | 13.4-38.8 |
| Lithium Carbonate | 8.0-21.2 |
| Barium carbonate | 0.0-3.1 |
| Zinc oxide | 0.0-1.7 |
| Boric acid | 0.0-14.3 |
| Dolomite | 0.0-4.6 |
• Between 15% and 35% "inorganic raw material" (mixture of kaolin and clay).
The body loading formula is as follows:
| **Raw material** | **% (by weight)** |
|---|---|
| Clay | 5-15 |
| Kaolin | 5-25 |
| Frit | 65-85 |
Glaze composition:
The glaze is composed of:
• Between 85% and 95% frit in the SiO₂-Al₂O₃- Li₂O system to be used as the main raw material in glaze compositions. The chemical analysis of the frit, expressed in oxides, and its charge formula are given in the tables above.
• Between 5% and 15% of "plastic inorganic raw material" (kaolin).
Therefore, the glaze loading formula is as follows:
*Glaze loading formula*
| **Raw material** | **% (by weight)** |
|---|---|
| Kaolin | 5-15 |
| Frit | 85-95 |

2. Glazed ceramic material with a low coefficient of thermal expansion, according to the first claim, **characterised in that** the coefficients of thermal expansion of the frit and the body are as follows:
*Dilatometric analysis of frit*
| **Property** | **Frit** |
|---|---|
| α₅₀₋₃₀₀ (_{∘}C⁻¹) x 10₋₇ | 9.7 |
| α₃₀₀₋₅₀₀ (_{∘}C⁻¹) x 10-7 | 19.7 |
*Dilatometric analysis of the fired body*
| **Sample** | **Body** |
|---|---|
| Expansion at 700°C (%o) | 1.4 |
| α₅₀₋₃₀₀ (_{∘}C⁻¹) x 10₋₇ | 11 |
| α₃₀₀₋₅₀₀ (_{∘}C⁻¹) x 10₋₇ | 23 |
| α₅₀₀₋₆₅₀ (oC-1) x 10-7 | 23 |

3. Manufacture of glazed ceramic material with a low coefficient of thermal expansion, according to the first claim, **characterised in that** the product consists of a pressed atomised ceramic material, coated with a thin vitreous layer of glaze, subjected to a heat treatment of less than 1200C in a cycle of total duration, variable depending on the thickness of the pressed body.

4. Glazed ceramic material with a low coefficient of thermal expansion, according to the first claim, **characterised in that** in order to obtain the low coefficient of expansion, the composition devitrifies, as the majority phase, a feldspar or orthoclase lithium (lithium silicoaluminate, LiAlSi₃O₈) and as minority phases Mullite (Al₆Si₂O₁₃), a Gahnite-type spinel (ZnAl₂O₄) and quartz (SiO₂).

5. Glazed ceramic material with a low coefficient of thermal expansion, according to the first claim, **characterised in that** it can be coloured in mass through the addition of inorganic pigments such as Fe-Cr based Black with Hematite crystalline structure; Ti-W-Cr based Brown with Rutile crystalline structure; Fe-Cr-Al based Brown with Hematite crystal structure; Al-Mn based Pink with Corundum crystal structure; Ti-Sb-Cr based Orange with Rutile crystal structure or Zr-Si-V based Blue with Zircon crystal structure.

6. Glazed ceramic material with a low coefficient of thermal expansion, according to the first claim, **characterised in that** its whiteness can be increased by the addition of aluminas and opacifiers such as zirconium silicate.

7. Glazed ceramic material with a low coefficient of thermal expansion, according to the first claim, **characterised by** the fact that its glaze can be decorated with coloured digital inorganic inks.

8. Use for the manufacture of glazed ceramic material with a low coefficient of thermal expansion, according to the first claim, **characterised in that** by containing 65 to 85% frit, a low coefficient of expansion is obtained for the manufacture of large format slabs >1.40 m / thickness 6 to 30 mm) in which the different whites and colours that can be developed from this material can be mixed throughout their mass (even in the form of veins imitating natural stone) without causing deformations or tensions in the final fired slab.

9. Use for the manufacture of glazed ceramic material with a low coefficient of thermal expansion, according to the first claim, **characterised in that** the coefficient of thermal expansion and conduction of the fired piece allows the installation of an induction generator underneath it, allowing the possibility of firing directly on the area where the generator has been installed, thus creating a single surface, no need to cut the material to insert a hob or induction hob.
